# EUROPEAN PATENT APPLICATION

(11) **EP 4 840 596 A1**
(43) Date of publication of application: **18.11.2026**
(21) Application number: 25738341.4
(22) Date of filing: 06.01.2025
(51) Int. Cl.: B25J 18/02, G01B 7/04

(54) **TELESCOPIC DEVICE AND ROBOT WITH ELECTRONIC SKIN FUNCTIONALITY**

(30) Priority: 12.01.2024 CN 202410053050
(71) Applicant: Beijing Tashan Technology Co., Ltd., Beijing 102308 (CN)
(72) Inventor: SUN, Tengchen, Beijing 102308 (CN); ZENG, Fanyou, Beijing 102308 (CN); YOU, Yanan, Beijing 102308 (CN)
(74) Representative: Yang, Shu
(86) International application number: PCT/CN2025/070635
(87) International publication number: WO 2025/148810

(57) **Abstract**

This invention relates to a telescopic device and robot with electronic skin functionality. The telescopic device includes a fixed sleeve and at least one sliding sleeve slidably engaged with the fixed sleeve, and is equipped with a first actuator for driving the sliding sleeve to extend or retract. At least two detection electrodes are arranged on at least one side wall of each sleeve along the telescopic direction. Each sleeve has a built-in processing module, a switch array, and a capacitance-to-digital converter circuit that couples the processing module. The capacitance-to-digital converter circuit on the sleeve is coupled to each electrode on the sleeve through a corresponding switch array. The telescopic device is equipped with a distance detection sensor for detecting the extension distance of the sliding sleeve. The distance detection sensor is coupled to the processing module, and the processing modules are coupled to each other to selectively obtain the capacitance value of the electrodes not nested in the sleeve based on the output of the distance detection sensor.

## Description

### Technical Field

This invention relates to the field of robotics, and more particularly to a telescopic device and robot with contact and/or proximity sensing capabilities .

### Background Technology

Robots are complex, highly precise, and tightly coupled systems that were initially used in industrial applications due to their operational flexibility. However, operator safety has always been a primary concern in robot operations. Preventing collisions with humans and causing injury is crucial for effective robot operation.

Capacitance detection technology offers advantages in terms of ease of deployment, structure, and cost. In particular, existing mature capacitor-to-digital converter (CDC) circuits, such as DAI7142 and ADI7147, use Δ-Σ modulation to directly convert the measured capacitance value into a digital value by repeatedly charging and discharging the measured capacitor and comparing it with a reference capacitor (see: US Patent Number: 5,134,401). This can improve the measurement sensitivity of capacitance to the 1ff level, easily meeting the capacitance measurement sensitivity requirements of measurement systems. It also has the characteristic of being immune to stray capacitance. In particular, the design of these chips has multiple channels, making circuit design simple and convenient, thereby effectively reducing costs and installation difficulty. Therefore, they are favored in the implementation of robot collision avoidance .

In the implementation schemes of capacitive electronic skin for robot collision avoidance, after extensive research, we found that they can be basically divided into three categories:
(1) Sensing the approach or contact of an object in the form of self-capacitance
   For example, patent document 202110581850.5 discloses that a robotic arm obtains the proximity sensing signal or even the contact sensing signal of an obstacle through the monitoring data of electronic skin , and then avoids it. The detection of the electronic skin is achieved by the two plates of a capacitor formed by the electrodes on the robotic arm and the obstacle. The approach or contact of the obstacle causes a change in the self-capacitance between the two plates, thereby realizing the detection.
   Patent document 202220470898.9 discloses an electronic skin, a robotic arm, and a robot. The electronic skin includes sheet-like electrodes, which together with a nearby conductor form a self-capacitance. The detection of the proximity or contact of the conductor is achieved through changes in the self-capacitance, thereby preventing the robotic arm from colliding.
(2) Mutual capacitance form
   For example, JP7251262B2 forms a mutual capacitance type capacitive sensor by setting electrodes 321 and 322 on the arm. Compared with self-capacitance for object proximity detection, it can detect the approach or contact of people with higher accuracy and is less affected by the external environment.
(3) Self-capacitance and mutual capacitance
   For example, PCT/US2016/050870 discloses a method for controlling a robotic arm. By setting a set of electrodes in each of two or more arm segments, the controller implements self-capacitance and mutual capacitance sensing techniques to measure capacitance values or capacitance values across two or more arm segments in a single sampling period, thereby detecting objects nearby and/or in contact with the arm segments. Self-capacitance has the advantage of long detection distance, while mutual capacitance has the advantage of accuracy; the combination of the two achieves superior performance.

On the other hand, home service robots represent a new application area and environment for robots, and have now been listed as one of the key development areas. It is hoped that robots will not only be used in industry but also enter people's home life.

Robots can be categorized into rotary-driven and linear-driven types. In industrial applications, due to the larger forces required for their operations, rotary-driven robots are primarily used. The structure of a rotary-driven robot, as shown in the aforementioned patent, resembles the movement of human joints. Its electronic skin mechanism has already been described and is a relatively mature solution in industry. Home service robots are a new development direction, and most teams are currently focusing on developing them towards anthropomorphism . While robots use rotary drives to create joints similar to humans to achieve anthropomorphism, anthropomorphic robots are still far from being integrated into users' daily lives due to limitations such as complex joint design, size, and cost.

For linearly driven robots, US20210170583A1 proposes a mobile manipulator robot that performs objective tasks in human environments. It aims to construct an XZ-axis linear motion system using linear drive, supplemented by a bottom-mounted mobile base to achieve Y-axis movement, aiming for simplicity and portability, and potentially enabling rapid integration into home life. However, linearly driven robots, especially telescopic robots, present challenges in the design of tactile electronic skin. Specifically, the telescopic arm of a telescopic robot uses a multi-segmented sliding sleeve relationship. For each sleeve, if electrodes are laid out as a whole in each segment, as in rotary robots, capacitance detection can be achieved when the sleeve is fully extended. However, when the sleeve is partially extended or partially extended, the detection electrodes are partially embedded in adjacent sleeves. The obstruction of the electrodes by the adjacent sleeves introduces large parasitic capacitance, ultimately resulting in poor electrode detection sensitivity and inaccurate perception of object approach or contact.

### Summary of the Invention

The purpose of this invention is to provide a hardware structure that can accurately realize tactile perception (proximity perception and/or contact perception) of a robot's telescopic movement, especially under the sliding telescopic movement of multiple sleeves, for realizing the tactile electronic skin perception of a telescopic robot.

To achieve this objective, a telescopic device with electronic skin functionality is provided. The telescopic device includes a fixed sleeve and at least one sliding sleeve slidably engaged with the fixed sleeve, and is equipped with a first actuator for driving the sliding sleeve to extend or retract. At least two detection electrodes are arranged on at least one side wall of each sleeve along the telescopic direction. Each sleeve has a built-in processing module, a switch array, and a capacitance-to-digital converter circuit that couples the processing module. The capacitance-to-digital converter circuit on the sleeve is coupled to each electrode on the sleeve through a corresponding switch array. The telescopic device is equipped with a distance detection sensor for detecting the extension distance of the sliding sleeve. The distance detection sensor is coupled to the processing module, and the processing modules are coupled to each other to selectively obtain the capacitance value of the electrodes not nested in the sleeve based on the output of the distance detection sensor.

The telescopic device of the present invention realizes tactile perception under the sliding and telescopic movement of multiple sleeves of the robot, with high detection accuracy and high sensitivity; each sleeve integrates chips such as CDC and processing modules, and the analog signal transmission line from the electrode to the CDC is limited to the individual sleeves. The signal transmission between sleeves utilizes the coupling between processing modules, such as a bus or wireless router, and transmits digital quantities, thus avoiding the introduction of parasitic capacitance.

In this invention, each sleeve should be understood as being connected sequentially in a nested manner.

In this invention, the distance detection sensor can be implemented in various ways, such as using laser, infrared, or ultrasonic methods. One improvement is to implement it visually. In this case, the distance detection sensor is configured as a camera, and each sleeve end is provided with a marker, such as a QR code, for camera positioning. Since the robot needs a camera on its head for vision, existing cameras can be reused for distance detection. Combined with positioning markers, distance detection can be achieved conveniently and at low cost.

Alternatively, considering the potential impact of insufficient light on visual distance detection in dark environments where robots may operate, another improvement is to use electrodes for low-cost and convenient extension distance detection. Specifically, the sleeves other than the outermost sleeve are referred to as inner sleeves. The distance detection sensor may include at least one electrode pair arranged on the sidewall of the inner sleeve. The electrode pair is configured to sense the extension distance of the sleeve. The projected areas of the two electrodes in the electrode pair relative to the sleeve are asymmetrically arranged. A capacitance-to-digital conversion circuit on the inner sleeve is coupled to the two electrodes in the electrode pair on the sleeve. When the sleeve extends, due to the asymmetry of the two electrodes in the electrode pair, the areas covered by the adjacent sleeves are unequal. The self-capacitance is correlated with the covered area. The self-capacitance of the two electrodes can be used to reflect their respective covered areas, and the extension length of the sleeve can be calculated using the ratio of the covered areas.

Considering the different mechanical and circuit structures distributed within each sleeve, the dielectric constant of the sleeve body is not uniformly distributed but rather non-uniform in many cases. For distance detection using only one electrode pair, this non-uniform dielectric distribution can easily affect the accuracy of the distance detection. Therefore, based on the above-mentioned improvement scheme, at least two electrode pairs are further provided on the sidewall of each inner sleeve, with each electrode pair arranged along the extension direction on the corresponding inner sleeve sidewall. During distance detection, the capacitance values of each electrode pair on the inner sleeve are differentially calculated between every two adjacent pairs. Based on the differential results, the position of the electrode pair located on the end edge of the adjacent sleeve is determined. Then, based on the self-capacitance ratio of the two electrodes in the electrode pair located at the end edge, the extension distance of the inner sleeve is determined. To facilitate computation, rolling differentials can be performed pairwise along the extension direction. This differential method removes environmental interference and, because the difference in capacitance between covered and uncovered sections of each electrode pair is significant enough to overcome interference from surface dielectric inhomogeneity, the differential results can accurately determine which electrode pair contains the end edge of an adjacent sleeve. Then, by taking the self-capacitance ratio of that electrode pair, the more specific location of the end edge within that pair can be determined. Since the area of that electrode pair is reduced, the influence of dielectric inhomogeneity is decreased , thus improving the accuracy of position detection within that electrode pair. More preferably, the method of differentially dividing the capacitance values of each electrode pair on the inner sleeve between adjacent segments can be further configured as follows: connecting two electrodes in parallel to form a large electrode in each electrode pair on the inner sleeve, obtaining the self-capacitance of each large electrode, and differentially dividing the self-capacitances of adjacent large electrodes; or connecting two electrodes in parallel to form a large electrode in each electrode pair on the inner sleeve, obtaining the mutual capacitance of adjacent large electrodes, and differentially dividing the two adjacent mutual capacitances. On the one hand, parallel connection to form a large electrode has a more sensitive detection capability; on the other hand, the mutual capacitance has a stronger ability to resist environmental interference than the self-capacitance, thus achieving a further improvement in accuracy.
be arranged on the side wall of the outermost sleeve ; and/or the electrode pairs of each sleeve are located on the same side, and the electrodes on each sleeve overlap vertically when the sleeve is fully retracted. By using the method of the electrodes overlapping each other when retracted, the dielectric of the sleeve surface is forced to be relatively uniform, thereby improving the distance detection effect.

In this invention, the detection electrode can be composed of two electrodes with the same structure as the electrode pair. During use, one side is used for distance detection, and the other one or more sides are used for tactile sensing. The advantage of having the detection electrode with the same structure as the electrode pair is that it is easy to manufacture, and the electrodes can be manufactured to uniform specifications.

In this invention, the telescopic device can be placed horizontally or vertically. The electrode pair is located on one side of the sleeve sidewall. For example, when the telescopic device is placed horizontally, the electrode pair is located on the bottom or top surface. The probability of collision is low on the bottom or top surface and higher on the left and right sides. At least two detection electrodes arranged along the telescopic direction are arranged on the other surfaces of the sleeve sidewall for tactile sensing.

As an improvement, the sleeve extending to its farthest end is designated as the end sleeve, and at least one detection electrode is arranged at the end of the end sleeve furthest from the fixed sleeve. With one electrode, self-capacitance can be used to detect whether an object is approaching or contacting the end, or to detect whether an end effector is loaded at the end. With two or more electrodes, self-capacitance and/or mutual capacitance can be used to detect approaching, contacting, or loading an end effector.

As another improvement, the processing module is further configured to: based on the extension distance of the sliding sleeve detected by the distance detection sensor, control the capacitance-to-digital conversion circuit to obtain the capacitance value of the detection electrodes not nested in the sleeve; and based on the capacitance value, output the electronic skin's signal for sensing the approach and/or contact of external objects. It should be understood that for mechanical structures, once the position of the detection electrodes on the sleeve is fixed, it is easy for the logic processing module to determine which detection electrodes are exposed and which are nested in the sleeve based on the extension distance of the sleeve. A simpler approach is to establish a mapping table; for example, when the sleeve extends 10cm, the first segment of the detection electrode on the sleeve is exposed, and when it extends 20cm, the first and second segments of the electrode are exposed. By using a switch array to shield the capacitance value of the detection electrodes nested in the sleeve and selecting the capacitance value of the detection electrodes not nested in the sleeve to reflect the approach and/or contact of an object, the parasitic capacitance introduced by the covering of electrodes by adjacent sleeves can be isolated, thereby improving the accuracy of the sensing judgment of object approach or contact.

Considering the need for lightweight, sliding, and electrical signal transmission in telescopic sleeves, as an improvement, each sleeve incorporates a built-in wireless communication module coupled to its corresponding processing module for mutual signal exchange, and an energy storage module to power the electrical components on that sleeve. Wireless communication avoids the structural complexity issues associated with wired transmission, providing an optimized basis for the overall lightweight design of the telescopic device. Building upon wireless communication, and considering the charging of the energy storage module, a wireless charging device can be installed on the fixed sleeve; each sliding sleeve is equipped with a charging coil for charging its corresponding energy storage module. The charging coils of each sliding sleeve are positioned such that, when the sliding sleeve is fully retracted, they are staggered in the direction perpendicular to the telescopic movement and aligned with the wireless charging device to receive power.

A robot with electronic skin functionality is also provided, including:
The base is configured for being driven to move on a load surface or for being fixed to a load surface;
At least one of the aforementioned telescopic devices is placed horizontally;
At least one vertical lifting mechanism is fixed to the top surface of the base for driving the telescopic device to rise and fall;
An end effector is attached to the extendable or retractable end of a telescopic device.

As an improvement, the vertical lifting mechanism of the present invention can also be implemented by vertical placement using the same structure as the telescopic device, or by using a hydraulic rod. Alternatively, the vertical lifting mechanism can be configured as a mast, with the mast vertically fixed to the top surface of the base. A connecting block movable along the mast is provided on the mast, the telescopic device is fixed to the connecting block, and the mast is equipped with a second actuator to drive the connecting block to rise and fall along the mast. For tactile sensing of the mast, at least two detection electrodes can be arranged radially on the surface of the mast shaft. Each detection electrode includes at least one strip electrode arranged along the shaft direction. The mast is equipped with a processing module and a capacitance-to-digital conversion circuit that couples the processing module to each strip electrode on the mast. More preferably, considering the interference of the connecting block sliding on the mast on the detection, each detection electrode is configured to include at least two strip electrodes arranged along the shaft direction, that is, multiple electrode segments are distributed along the vertical direction of the mast. In use, by shielding the electrode segment where the connecting block is located, tactile sensing is performed by the capacitance of other electrode segments, providing detection accuracy, and can also be used to distinguish the height position of surrounding obstacles. More preferably, the connecting block is sleeved on the outside of the mast, and the surface of the mast body is provided with a groove, in which the strip electrode on the surface of the mast body is accommodated and thus avoids misalignment.

As an improvement, at least two detection electrodes are arranged on the four sides of the base. The base is equipped with a processing module and a capacitor-to-digital converter circuit that couples the processing module . The capacitor-to-digital converter circuit couples each electrode on the base. Electronic skin is wrapped around the four sides of the chassis, which can detect obstacles such as human bodies around the chassis.

### Attached Figure Description

Figure 1 shows a schematic diagram of the overall appearance of a telescopic arm and robot with electronic skin function ;
Figure 2 shows a schematic diagram of a telescopic arm with electronic skin function and the base drive wheels of a robot;
Figure 3 shows a schematic diagram of a telescopic arm with electronic skin function and the base mechanism of a robot;
Figure 4 shows a schematic diagram of a telescopic arm with electronic skin function and a lifting mechanism for a robot;
Figure 5 shows a schematic diagram of the electrode arrangement of a telescopic arm and robot with electronic skin function and lifting mechanism.
Figure 6 shows a schematic diagram of a telescopic arm and robot with electronic skin function and horizontal movement mechanism;
Figure 7 shows a schematic diagram of a telescopic arm with electronic skin function and a horizontal telescopic arm structure of a robot.
Figure 8 shows a schematic diagram of the horizontal telescopic arm electrode of a robot with electronic skin function;
Figure 9 shows a schematic diagram illustrating the visual positioning of a telescopic arm with electronic skin function and a robot's horizontal telescopic arm.
Figure 10 shows a schematic diagram of various end effectors of the dual telescopic protective robot.

### Detailed Implementation

present invention will be clearly and completely described below with reference to the accompanying drawings in the embodiments of the present invention.

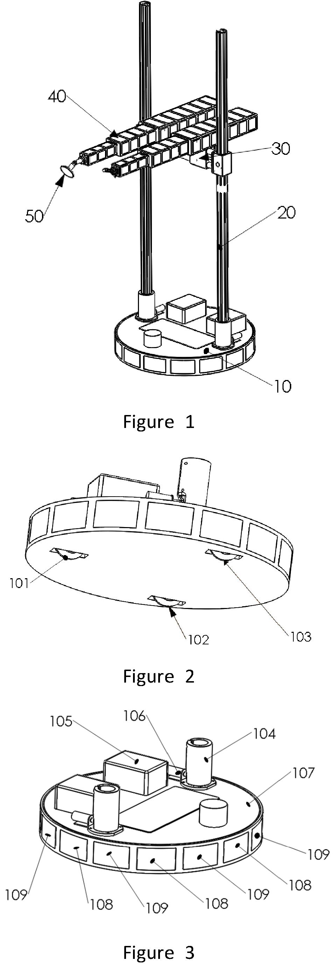

As shown in Figure 1, the dual telescopic protective robot mainly comprises a movable chassis 10 , two vertical lifting rods 20 , a horizontal guide rail module 30 , two telescopic robotic arms 40 , and an end effector 50. The movable chassis 10 has the ability to move freely and can also achieve overall turning by varying the rotational speeds of its wheels. Two vertical masts are arranged on the chassis 10 , each containing a synchronous belt connected to both ends of the horizontal guide rail module 30. The synchronous belt drives the horizontal guide rail module 30 and the telescopic robotic arms 40 to move up and down. The two telescopic robotic arms 40 are fixed to two sliders on the horizontal guide rail module 30 , and the sliders drive the telescopic robotic arms 40 to move left and right on the horizontal guide rail module 30. The end effector 50 is fixed to the end of the telescopic robotic arms 40 , and the telescopic movement of the telescopic robotic arms 40 drives the end effector to move forward and backward.

As shown in Figure 2, the movable chassis 10 mainly consists of three wheels: drive wheel 101 , drive wheel 102 , and drive wheel 103. When drive wheels 101 , 102 , and 103 rotate simultaneously in the same direction and at the same speed, the robot moves forward or backward; when drive wheels 102 and 103 rotate at different speeds, the robot turns left or right during its movement.

Figure 3 , the movable chassis 10 is equipped with two vertical lifting rod fixing seats 104 , two battery packs 105 , two drive motors 106 , and a base structure shell 107. On the side wall of the base structure shell 107 , detection electrodes 108 and 109 are alternately arranged. Electrodes 108 and 109 form mutual capacitance, which can detect the approach and touch signals of a human body or object. The drive motors 106 drive the synchronous belt on the vertical masts 20 , achieving synchronous movement of the two vertical masts through unified drive circuit control.

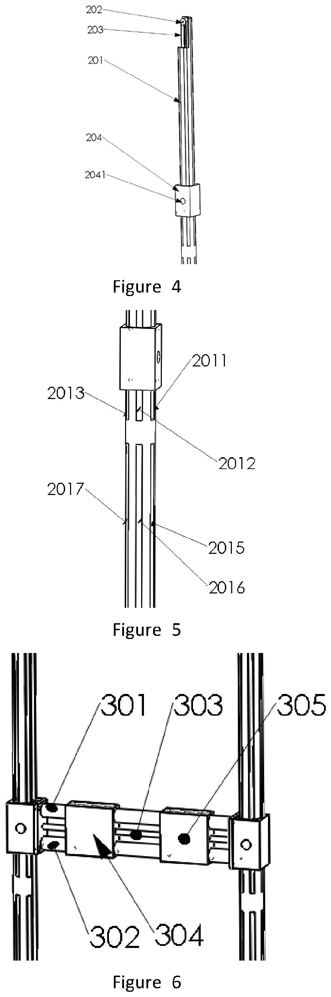

Figure 4 , the vertical mast 20 mainly includes a mast 201 , a timing pulley 202 and a timing belt 203 , and a slider 204 fixed on the timing belt 203. A camera 2041 is arranged on the slider 204 to observe the environment around the robot and detect the end position of the horizontal telescopic arm 40 .

Figure 5 , vertical electrodes are arranged on the mast 201 , divided into two sections. The upper section has four electrodes evenly distributed: 2011 , 2012 , 2013 , and 2014. The lower section also has four electrodes evenly distributed: 2015 , 2016 , 2017 , and 2018. The four electrodes in the upper section form mutual capacitances in pairs, and the four electrodes in the lower section also form mutual capacitances in pairs, used to detect signals from people or objects approaching the mast.

Figure 6 , the horizontal movement module 30 mainly includes an upper horizontal guide rail 301 , a lower horizontal guide rail 302 , a fixed lead screw 303 , an electric slider 304 , and an electric slider 305. The upper and lower horizontal guide rails 301 and 302 are responsible for bearing the main weight of the horizontal telescopic robotic arm 40 and the end effector 50 , while the electric sliders 304 and 305 are responsible for driving the horizontal telescopic robotic arm 40 and the end effector 50 to move left and right in the horizontal direction.

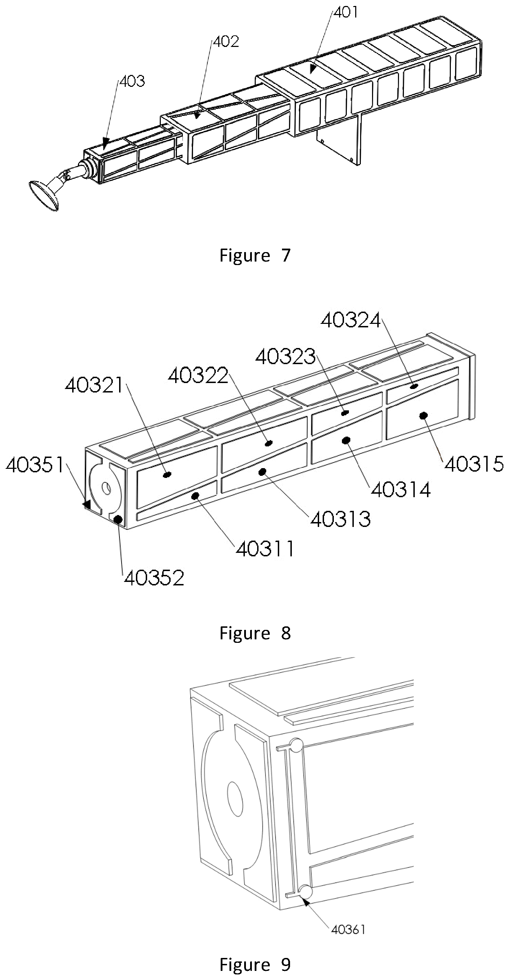

Figure 7 , the horizontal telescopic robotic arm 40 mainly comprises a fixed sleeve 401 , an intermediate sleeve 402 , and an end sleeve 403. Electrodes are arranged on the side walls of the three sleeve sections to detect signals from human bodies or objects from different directions.

Figure 8 , segmented electrodes are arranged on the left, right, and top sides of the movable sleeve of the horizontal telescopic robotic arm 40. A pair of trapezoidal multi-segment electrodes are arranged on the side of each segment of the movable sleeve. Two electrodes are arranged on the distal end face of the end sleeve 403 to detect the proximity signals of the end effector and objects in front. Taking the end sleeve 403 as an example, its side is arranged with pairs of trapezoidal multi-segment electrodes 40311 , 40313 , 40314 , 40315 , 40321 , 40322 , 40323 , and 40324 . The distance by which the end sleeve 403 extends beyond the intermediate sleeve 402 is detected by differential signals from side electrodes 40311 and 40321, electrodes 40313 and 40322 , electrodes 40314 and 40323 , and electrodes 40315 and 40324. Electrodes 40351 and 40352 are arranged on the end face of the end sleeve 403 away from the fixed sleeve 401 to detect the status of the end effector 50 and signals from other objects approaching from the front.

Figure 9 , on the end sleeve 403 of the horizontal telescopic robotic arm 40 , visual positioning marks 40361 are arranged on the left and right sides at the end away from the fixed sleeve 401 , respectively, to cooperate with the camera 2041 arranged on the slider 204 to position the end effector 50 .

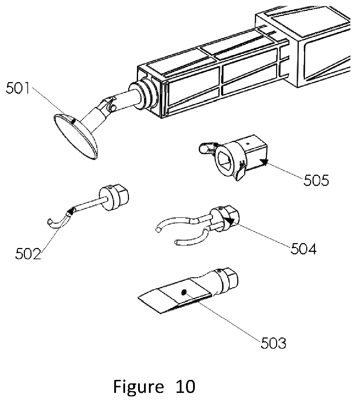

Figure 10 , the robot can work with various end effectors 50 to handle different tasks. These include various end effectors such as 501 , 502 , 503 , 504 , and 505 , each performing different tasks.

Finally, it should be noted that the above embodiments are only used to illustrate the technical solutions of the present invention , and are not intended to limit the scope of protection of the present invention . Although the present invention has been described in detail with reference to preferred embodiments , those skilled in the art should understand that modifications or equivalent substitutions can be made to the technical solutions of the present invention without departing from the essence and scope of the technical solutions of the present invention .

## Claims

1. , A retractable device with electronic skin functionality,
the telescopic device includes a fixed sleeve(401) and at least one sliding sleeve (402, 403) that is slidably engaged with the fixed sleeve(401), and is equipped with a first actuator for driving the sliding sleeve (402, 403) to extend or retract,
its features are :
at least two detection electrodes are arranged on at least one side wall of each sleeve along the telescopic direction, each sleeve has a built-in processing module , a switch array, and a capacitance-to-digital converter circuit for coupling the processing module, the capacitance-to-digital converter circuit on the sleeve is coupled to each electrode on the sleeve through the corresponding switch array;
the telescopic device is equipped with a distance detection sensor for detecting the extension distance of the sliding sleeve (402, 403), and a distance detection sensor coupled with a processing module, the processing modules are coupled to each other and are used to selectively obtain the capacitance value of the electrodes that are not nested in the sleeve based on the output of the distance detection sensor.

2. , The telescopic device according to claim 1 is **characterized in that**:
the distance detection sensor is configured as a camera(2041);
each sleeve end is marked for camera positioning(40361).

3. , The telescopic device according to claim 1 is **characterized in that**:
except for the outermost sleeve, all other sleeves are inner sleeves;
the distance detection sensor includes at least one electrode pair arranged on the side wall of the inner sleeve, the electrode pair is configured to sense the extension distance of the sleeve, the two electrodes in the electrode pair are asymmetrically arranged with respect to the projected area of the sleeve, a capacitor-to-digital converter circuit on the inner sleeve is coupled to the two electrodes in the electrode pair on the sleeve(40311, 40321, 40313, 40322, 40314, 40323, 40315, 40324).

4. , The telescopic device according to claim 3 is **characterized in that** :
each inner sleeve has at least two electrode pairs on its sidewall, and each electrode pair is arranged along the telescopic direction on the corresponding inner sleeve sidewall.

5. , The telescopic device according to claim 4 is **characterized in that** :
the outermost sleeve also has at least one of the electrode pairs arranged on its sidewall; and/or
the electrode pairs of each sleeve are located on the same side, and the electrodes on each sleeve overlap vertically when the sleeve is fully retracted.

6. , according to claim 3, 4 or 5 is **characterized in that**:
the detection electrode is configured as two electrodes with the same structure as the electrode pair.

7. , according to claim 3, 4 or 5 is **characterized in that**:
the electrode pair is disposed on one side of the sleeve sidewall;
at least two detection electrodes are arranged along the extension and contraction direction on all other surfaces of the sleeve sidewall except this one.

8. , the telescopic device according to claim 1 is **characterized in that**:
the end sleeve, which extends to the farthest end, is the terminal sleeve(403), and at least one detection electrode is arranged at the end of the terminal sleeve that is away from the fixed sleeve.

9. , According to claim 1 , the telescopic device is **characterized in that** the processing module is further configured as follows :
based on the extension distance of the sliding sleeve detected by the distance detection sensor, the capacitance-to-digital conversion circuit is controlled to obtain the capacitance value of the detection electrode that is not nested in the sleeve;
based on the capacitance value, the electronic skin outputs a proximity and/or contact sensing signal for external objects.

10. , According to claim 4 , wherein the processing module is further configured as follows :
the capacitance values of each electrode pair on the inner sleeve are differentially divided between every two adjacent segments, based on the differential results, the position of the electrode pair located on the end edge of the adjacent sleeve is determined,
the extension distance of the inner sleeve is determined based on the self-capacitance ratio of the two electrodes in the electrode pair where the end edge is located.

11. , According to claim 10 , the telescopic device is **characterized in that** , the step of differentially dividing the capacitance values of each electrode pair on the inner sleeve between every two adjacent segments further includes :
the two electrodes on each segment of the inner sleeve are connected in parallel to form a large electrode, the self-capacitance of each large electrode segment is obtained, and the self-capacitance of two adjacent large electrodes segments is differentially divided;
alternatively, the two electrodes on each segment of the inner sleeve can be connected in parallel to form a large electrode, and the mutual capacitance between two adjacent large electrodes can be obtained, the two adjacent mutual capacitances can then be differentially divided.

12. , The telescopic device according to claim 1 is **characterized in that**:
each bushing has a built-in wireless communication module that couples with the corresponding processing module for mutual signal exchange, and an energy storage module that supplies power to the electrical appliances on the bushing.

13. , The telescopic device according to claims 1 and 2 is **characterized in that**:
the fixed sleeve is equipped with a wireless charging device;
each sliding sleeve is equipped with a charging coil for charging the corresponding energy storage module, the position of the charging coil of each sliding sleeve is configured such that when the sliding sleeve is fully retracted, it can be staggered with each other in the direction perpendicular to the extension and retraction and each is aligned with the wireless charging device to receive power.

14. , A robot with electronic skin functionality , **characterized in that** it comprises :
the base is configured for being driven to move on a load surface or for being fixed to a load surface;
at least one telescopic device as described in claims 1-13;
at least one vertical lifting mechanism is fixed to the top surface of the base for driving the telescopic device to rise and fall;
an end effector is attached to the extendable or retractable end of the telescopic device.

15. , According to claim 14 is **characterized in that**:
the vertical lifting mechanism is configured as a mast(201), which is vertically fixed to the top surface of the base(10), a movable connecting block is provided on the mast(201), and the telescopic device is fixed to the connecting block(204), the mast is equipped with a second actuator to drive the connecting block(204) to move up and down along the mast(201).

16. , According to claim 15 is **characterized in that**:
the mast (201)shaft surface is provided with at least two detection electrodes arranged radially thereon, each detection electrode including at least one strip electrode arranged along the shaft direction;
the mast(201) is equipped with a processing module and a capacitor-to-digital converter circuit that couples the processing module , the capacitor-to-digital converter circuit is coupled to each strip electrode on the mast(201).

17. , According to claim 16 is **characterized in that**:
each detection electrode segment includes at least two strip electrodes arranged along the rod shaft.

18. , According to claim 14 is **characterized in that**:
at least two detection electrodes are arranged on the four sides of the base(10), the base(10) is equipped with a processing module and a capacitor-to-digital converter circuit that couples the processing module to each electrode on the base (10).
